# EUROPEAN PATENT APPLICATION

(11) **EP 1 085 261 A1**
(43) Date of publication of application: **21.03.2001**
(21) Application number: 00118012.4
(22) Date of filing: 22.08.2000
(51) Int. Cl.: F23D 14/22

(54) **Improved nozzle-mix burner**

(30) Priority: 13.09.1999 US 394749
(71) Applicant: Ballard Generation Systems Inc., Burnaby, B.C. V5A 2X2 (CA)
(72) Inventor: Buswell, Richard F., Rocky Hill, Connecticut 06067 (US)
(74) Representative: Beyer, Andreas, Dr.

(57) **Abstract**

An improved nozzle-mix burner includes a burner head (10) comprising a pair of air distribution chambers (34,44), each having at least one air inlet (36,46) for supplying air thereto, and a plurality of air ports (38,48) for discharging air therefrom, and a fuel distribution chamber (24) having at least one fuel inlet (26) for supplying fuel thereto, and a plurality of fuel ports (28) for discharging fuel therefrom. Within the burner head, the fuel distribution chamber is fluidly isolated from, and interposed between, the pair of air distribution chambers. The fuel ports and the two sets of air ports are arranged such that in operation fuel discharged from the fuel ports mixes with air discharged from the first and second air ports. For improved mixing of the gases exiting the burner head, each fuel port is preferably disposed between a pair of air ports.

## Description

### Field Of The Invention

The present invention relates to an improved nozzle-mix burner, and in particular, nozzle-mix burner heads and burners suitable for use in conjunction with multiple fuels and air.

### Background Of The Invention

Burners are employed to provide heat in a variety of industrial applications. In general, burners operate on a combustible mixture of a fuel and an oxidant, typically air. In pre-mix burners fuel and air are mixed upstream of or inside the burner head before the resulting combustible mixture is discharged from the burner head. In nozzle-mix burners, all fuel and air mixing occurs after the fuel and air exit the burner head.

Nozzle-mix burners are generally capable of operating over a range of fuel and air flow rates. Conventional burners typically achieve optimal mixing over a limited range of fuel and air flow rates. Optimal mixing occurs when the fuel and air are substantially thoroughly mixed and the burner cleanly burns all of the fuel. However, when the fuel and/or air flow rates are too high, too low, or too imbalanced, this causes poor mixing and unstable operation. At certain flow rates, the fuel and air are not adequately mixed at the nozzle, causing incomplete and less efficient combustion, which thereby increases the amount of combustion by-products such as carbon monoxide (CO) and unburned hydrocarbons (UHC) produced. If operation is sufficiently unstable, there is also a significant risk of flame-out.

In order to achieve low fuel and by-product emissions over the entire operational range of the burner, it is important that the fuel and air gases are uniformly mixed. Pre-mix burners can achieve uniform mixing of fuel and air in low-pressure systems, but with a potential risk of flashback, wherein the combustion zone jumps from outside the burner nozzle to inside the burner head. Nozzle-mix burners avoid the flashback problem by isolating the fuel stream from the air stream within the burner head, and thus there is no combustible mixture present inside the burner. However, conventional nozzle-mix burners typically use high pressure drop across the nozzle to ensure uniform distribution and mixing of fuel and air. Accordingly, conventional nozzle-mix burners generally do not operate at lower pressures because this typically results in an undesirably non-uniform distribution of gases exiting the nozzle, poorer quality mixing of fuel and air, and resultant higher CO and UHC emissions.

In applications where burners are employed in catalytic hydrocarbon reformers, for example, it is also desirable to have the burners operate cleanly and efficiently even when the composition of one or both of the fuel and air streams change. A catalytic reformer converts a raw fuel stream, comprising, for example, natural gas, light distillates, methanol, propane, naptha, kerosene, and/or combinations thereof, and water vapor into a hydrogen-rich reformate stream. The catalytic reactions are endothermic so a burner is typically used to provide heat to promote these reactions. A typical catalytic hydrocarbon reformer is described and illustrated in U.S. Patent No. 5,484,577 issued January 16, 1996, which is incorporated herein by reference in its entirety. The hydrogen-rich reformate stream produced by the reformer may be directed to the anode of an electrochemical fuel cell after passing through a water gas shift reactor and other purification means such as a carbon monoxide selective oxidizer. For example, in an electrochemical fuel cell power plant a catalytic reformer may be used to convert natural gas into a hydrogen-rich fuel stream, and it is desirable to have a burner capable of operating on natural gas and air (start-up mode), a reformate stream and air (transition or "hot hold" mode) , and the fuel cell anode and cathode exhaust streams (normal operation mode) . Conventional nozzle-mix burners have difficulty achieving clean and efficient operation under such varied operating conditions.

For example, in a conventional nozzle-mix burner in which fuel gas is introduced through a central nozzle and air is directed around the periphery of the nozzle, it can be difficult to achieve stable operation of the burner at start-up using natural gas as fuel. Other conventional designs direct the air stream tangentially across the fuel stream exiting the burner head to yield improved combustion, but these burners require the use of excess air. As a result, efficiency is reduced and extra equipment may be required to provide the additional air, increasing the parasitic load on the fuel cell power plant.

In the preferred normal operation mode, when the fuel cell anode and cathode exhaust streams are mixed to provide the combustible mixture, stable burner operation is especially difficult. To avoid inefficient combustion and unstable burner operation, conventional nozzle-mix burners usually require air having an oxygen concentration greater than about 13% by volume. The oxygen concentration of the cathode exhaust stream during normal operation, on the other hand, may be as low as 11% by volume, or less. Accordingly, the low oxygen concentration of the cathode exhaust stream is particularly problematic for conventional nozzle-mix burners.

Furthermore, under such low-oxygen conditions, conventional industrial burners generally fail to achieve stable operation at turndown ratios exceeding 4:1. In some applications, it is desirable to have a burner capable of stable operation at higher turndown ratios. In particular, in a catalytic reformer operating on anode and cathode exhaust streams from an associated fuel cell, it is desirable to have a burner capable of stable operation at turndown ratios in excess of 4:1.

An improved nozzle-mix burner that is capable of operating on varying fuel and air compositions, at variable flow rates, and at lower fluid pressures than conventional nozzle-mix burners is described herein. The improved nozzle-mix burner is capable of stable, low-emission operation at a pressure drop through the burner of less than about 0.5 psi (3.4 kPa) and at turndown ratios exceeding 4:1.

A catalytic reformer employing an improved nozzle-mix burner that is capable of stable operation utilizing an oxygen-containing gas stream with an oxygen concentration less than 13% by volume is also described.

### Summary Of The Invention

An improved nozzle-mix burner comprises a burner head, the burner head comprising:
(a) a first air distribution chamber having at least one air inlet for supplying air thereto, and a plurality of first air ports for discharging air therefrom;
(b) a second air distribution chamber having at least one air inlet for supplying air thereto, and a plurality of second air ports for discharging air therefrom;
(c) a fuel distribution chamber having at least one fuel inlet for supplying fuel thereto, and a plurality of fuel ports for discharging fuel therefrom.

Within the burner head the fuel distribution chamber is fluidly isolated from, and interposed between, the first and second air distribution chambers. The fuel ports and the first and second air ports are arranged such that in operation fuel discharged from the fuel ports mixes with air discharged from the first and second air ports.

Preferably, within the burner head the first air distribution chamber is fluidly isolated from the second air distribution chamber such that air within the first air distribution chamber does not mix with air within the second air distribution chamber. The burner head may comprise a unitary structure divided into three fluidly isolated distribution chambers.

For improved mixing of gases exiting the burner head, each one of the plurality of fuel ports is preferably disposed between at least one of the plurality of first air ports and at least one of the plurality of second air ports. Further, the fuel distribution chamber and associated fuel ports, the air distribution chambers and associated air ports, or both, are desirably configured to discharge respective fuel or air in a direction towards a combustion zone. For example, the fuel distribution chamber and associated fuel ports, the air distribution chambers and associated air ports, or both, may be configured to discharge respective fuel and air from the burner head at an angle less than or equal to 90° from the longitudinal axis of the burner head in a direction towards a desired combustion zone.

The fuel ports and the first and second air ports may be any shape, but are preferably substantially circular.

The improved nozzle-mix burner may further comprise: a first air supply pipe for supplying the air from an air feed to the first air distribution chamber via at least one associated air inlet; a second air supply pipe for supplying the air from the air feed to the second air distribution chamber via at least one associated air inlet; and a fuel supply pipe for supplying the fuel from a fuel feed to the fuel distribution chamber via at least one associated fuel inlet.

To achieve more consistent flow uniformity, it is important to select suitably sized components so that the cross-sectional flow area of the ports, distribution chambers, and supply pipes for both fuel and air are in proper proportion relative to one another. In preferred embodiments, the ratio of the cross-sectional flow area of: the first air distribution chamber to the associated plurality of first air ports is about 2:1; the first air supply pipe to the associated plurality of first air ports is about 2.5:1; the second air distribution chamber to the associated plurality of second air ports is about 3:1; the second air supply pipe to the associated plurality of second air ports is about 2.5:1; the fuel distribution chamber to the associated plurality of fuel ports is about 2:1; and the fuel supply pipe to the associated plurality of fuel ports is about 2.5:1.

The air and fuel supply pipes may be substantially co-axial. In some embodiments, at least a portion of each of the air and fuel supply pipes is disposed within, or around, another one of the air and fuel supply pipes. Where the air and fuel supply pipes are substantially co-axial, the pipes may be defined by:
(a) a first air supply pipe extending through the second air distribution chamber and the fuel distribution chamber and supplying air to the first air distribution chamber via at least one associated air inlet;
(b) a fuel supply pipe extending through the first air distribution chamber and supplying fuel through an annular space between the fuel supply pipe and the first air supply pipe to the fuel distribution chamber via at least one associated fuel inlet; and
(c) a second air supply pipe supplying air through an annular space between the second air supply pipe and the fuel supply pipe to the second air distribution chamber via at least one associated air inlet.

In certain embodiments of the nozzle-mix burner, the burner head is substantially in the shape of a cylinder, wherein the first and second air distribution chambers are spaced along the longitudinal axis of the cylinder. Preferably in these embodiments, the plurality of fuel ports and first and second air ports are spaced around the outer curved surface of the cylinder for providing a substantially symmetric radial distribution of fuel and air about the burner head.

In other embodiments of the nozzle-mix burner, the burner head is substantially in the shape of a frustum comprising at least one substantially planar radial surface and a curved lateral surface. The lateral surface may be disposed at various angles, but is preferably sloped towards the axis of the frustum at an angle of about 75°. The fuel ports and the first and second air ports are formed in the lateral surface of the frustum. Preferably in these other embodiments, in operation fuel and air are discharged from the respective fuel ports and first and second air ports in a direction substantially perpendicular to the lateral surface. In preferred embodiments, the plurality of fuel and air ports are spaced around the lateral surface for providing a substantially symmetric radial distribution of the fuel and air about the burner head.

In any of the above embodiments, the nozzle-mix burner may further comprise an air diffuser disposed in the first air supply pipe between the air feed and the at least one associated air inlet, and in the second air supply pipe between the air feed and the at least one associated air inlet. The air diffusers increase the uniformity of flow distribution of the air across the cross-section of the first and second air supply pipes. The air diffusers may, for example, comprise a perforated plate. The open area of the perforated plate is preferably between 25 and 75 percent, and more preferably about 34%.

The improved nozzle-mix burner may be operated so that the pressure drop of fuel and air streams passing through the burner is less than about 0.5 psi (3.4 kPa), or less than about 0.3 psi (2.1 kPa).

The improved nozzle-mix burner is capable of stable operation using a variety of fuel streams, for example, hydrogen, natural gas, reformate or anode exhaust gas from a fuel cell. It may further be capable of stable operation using an oxygen-containing gas for combustion that comprises less than 13% oxygen by volume.

Any of the above described embodiments of an improved nozzle-mix burner may be employed in a catalytic reformer comprising a reformer vessel housing at least one reactor tube assembly containing a catalyst. The burner head is disposed within the reactor vessel for providing heat to the at least one reactor tube. At the operating temperature of the catalytic reformer, the reactor tube assembly typically radiates heat in the vicinity of the burner head. This assists with maintaining stable operation of the burner especially when it is supplied with a combustion air stream with an oxygen concentration of less than 13% by volume. Preferably, in this application the burner is capable of stable operation when fed with a combustion air stream with less than or equal to 11% oxygen by volume, and when the pressure drop of fuel and air streams passing through the burner is less than about 0.5 psi (3.4 kPa), or even less than about 0.3 psi (2.1 kPa).

### Brief Description Of The Drawings

FIG. 1 is is an elevation view, partially in section, of one embodiment of an improved nozzle-mix burner apparatus;
FIG. 2 is a detailed elevation view, partially in section, of the nozzle-mix burner apparatus of FIG. 1;
FIG. 3 is a perspective view of the nozzle-mix burner head of the apparatus of FIG. 1;
FIG. 4 is an elevation view, partially in section, of another embodiment of an improved nozzle-mix burner apparatus;
FIG. 5 is a sectional elevation view of the nozzle-mix burner apparatus of FIG. 4;
FIG. 6 is an elevation view of the nozzle-mix burner head of the apparatus of FIG. 4;
FIG. 7A and FIG. 7B are quarter-section top views of the air diffusers in FIG. 4; and
FIG. 8 is a partial sectional elevation view of an embodiment of an improved nozzle-mix burner apparatus mounted in a catalytic reformer.

### Detailed Description Of The Preferred Embodiments

As used in this description and in the appended claims, "reformate" means a hydrogen-rich gas stream that is the product of the catalytic reforming of hydrocarbon fuels, comprising, for example, natural gas, light distillates, methanol, propane, naphtha, kerosene, and/or combinations thereof. "Anode exhaust stream" means the gas exiting from the anode side of an operating fuel cell and "cathode exhaust stream" means the gas exiting the cathode side of an operating fuel cell. "Air" is used to refer to any oxygen-containing gas stream suitable for use in a burner, such as, for example, substantially pure oxygen, ambient air or a cathode exhaust stream.

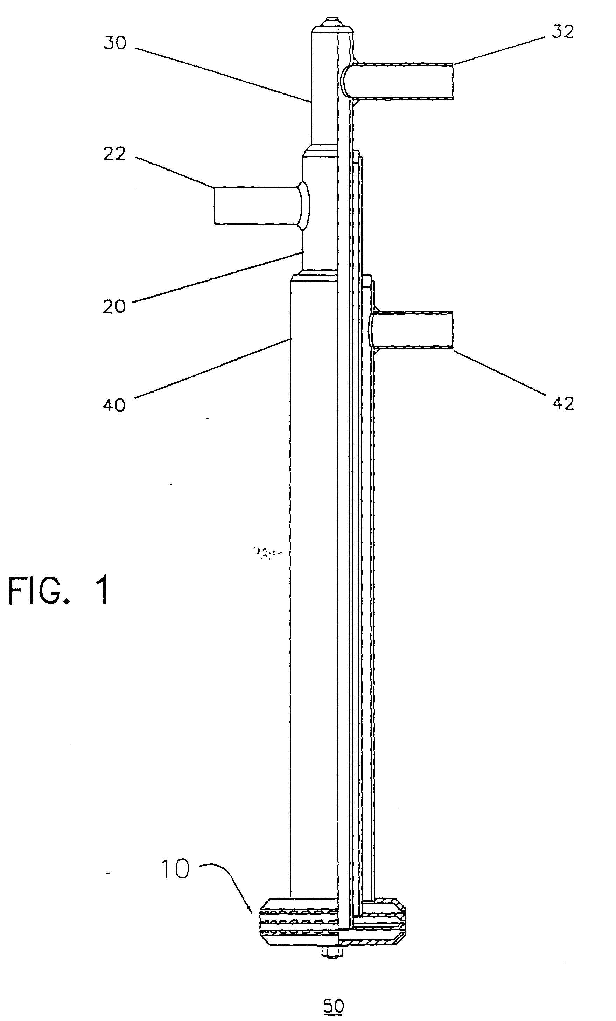

FIGs. 1 through 3 are views of one embodiment of an improved burner apparatus comprising nozzle-mix burner head 10. Referring to FIG. 1, fuel is fed into fuel supply pipe 20 via the fuel feed 22. Air is fed into first air supply pipe 30 via associated first air feed 32 and into second air supply pipe 40 via associated second air feed 42.

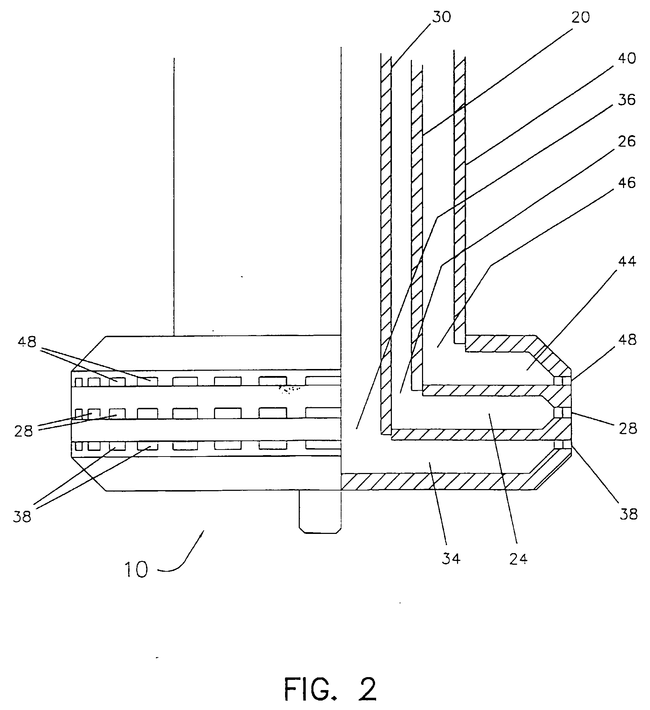

Referring to FIG. 2, fuel flows through the annular space between fuel supply pipe 20 and first air supply pipe 30 to fuel distribution chamber 24 via fuel inlet 26. Air flows through first air supply pipe 30 to first air distribution chamber 34 via associated air inlet 36. Air also flows through the annular space between second air supply pipe 40 and fuel supply pipe 20 to second air distribution chamber 44 via associated air inlet 46. Within burner head 10, each one of distribution chambers 24, 34, and 44 is fluidly isolated from the others.

Fuel discharged from fuel ports 28, and air discharged from air ports 38 and 48 mix in combustion zone 50 (shown on FIG. 1), where they are ignited by a conventional ignitor (not shown). The ignitor is only required to initiate combustion and thereafter combustion is self-sustaining as long as fuel and air are supplied to the burner.

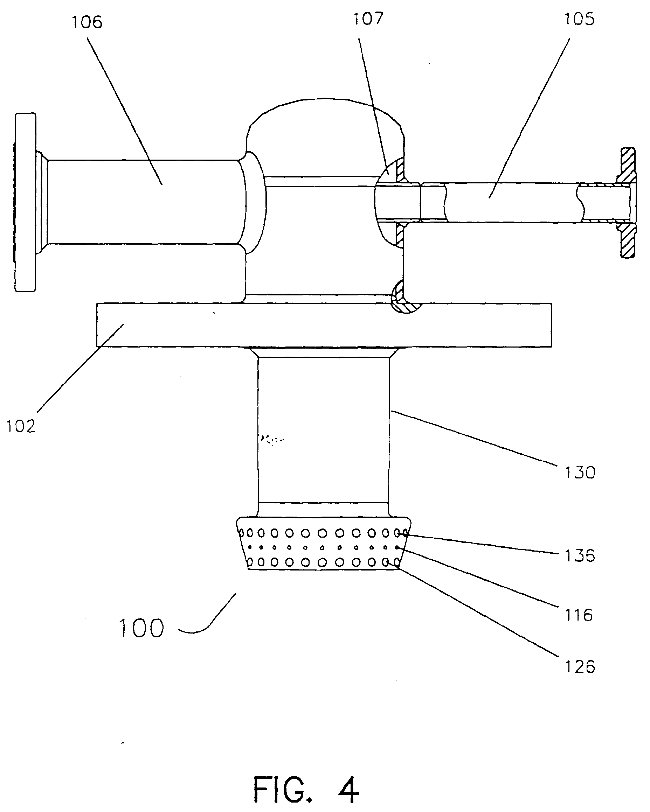

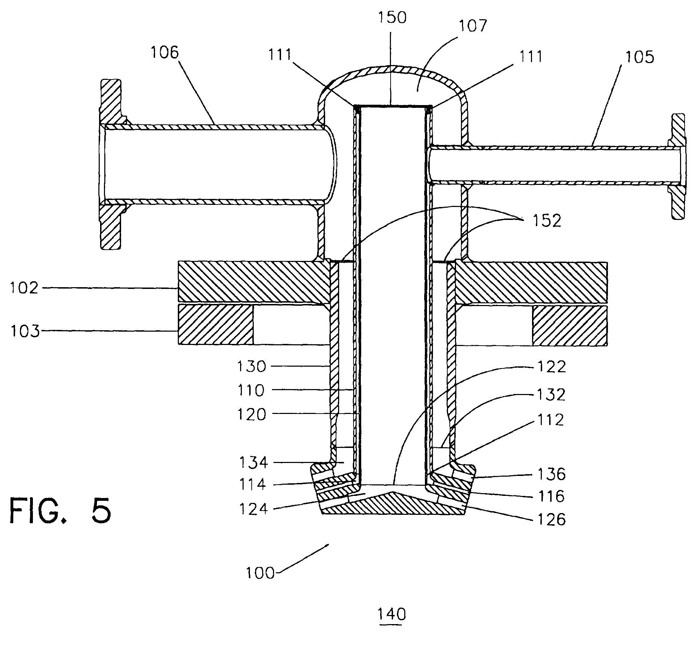

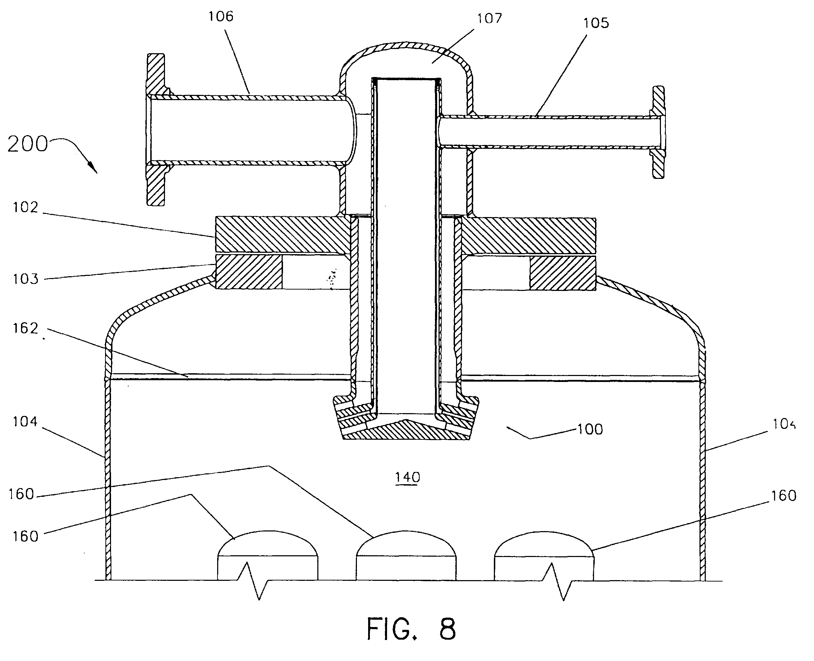

FIGs. 4 through 6 are views of another preferred embodiment of the present burner apparatus comprising burner head 100. FIGS. 4 and 5 show the burner apparatus supported by mounting plate 102. Mounting plate 102 attaches, for example, to a flange of a reformer vessel (for example, see FIG. 8).

Fuel flows from fuel feed 105 to the annular space between fuel supply pipe 110 and first air supply pipe 120. Within the burner, fuel in supply pipe 110 is fluidly isolated from air in first air supply pipe 120 by annular end wall 111. Fuel then flows through fuel inlet 112 into fuel discribution chamber 114 and is discharged via fuel ports 116. Air flows from common air feed 106 into the common air feed chamber 107 and then into first and second air supply pipes 120 and 130, respectively. Air then flows through air inlets 122 and 132 into first and second air distribution chambers 124 and 134, respectively, and is discharged through respective air ports 126 and 136. Fuel discharged from fuel ports 116, and air discharged from air ports 126 and 136 mix outside the burner head 100 in the vicinity of combustion zone 140, where they are burned.

In order to achieve efficient combustion of the fuel-air mixture and low CO and UHC emissions, it is important that the fuel and air exiting from the burner head are thoroughly mixed. In applications where the burner is employed in a furnace or reformer, it is also important for the burner to provide evenly distributed heat. Accordingly, it is important for the outlet ports to be oriented and sized to discharge the fuel and air from the burner head to promote combustion that will provide evenly distributed heat to the desired combustion zone. The present nozzle-mix burner apparatus employs several means to accomplish thorough fuel and air mixing and provide evenly distributed heat.

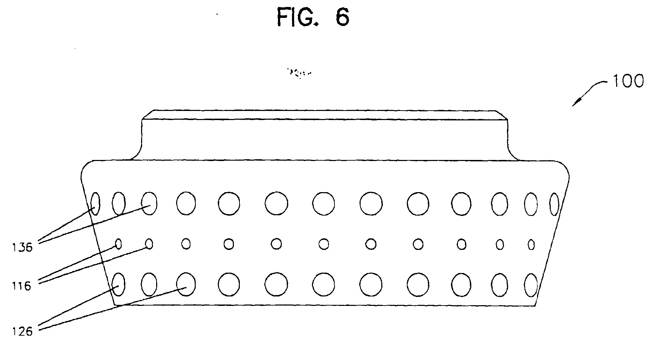

First, as best shown in FIG. 6, the air and fuel ports of burner head 100 are arranged with each fuel port 116 interposed between a pair of associated air ports 126 and 136, respectively, which provides for improved fuel and air mixing and results in highly efficient combustion of the fuel-air mixture.

Second, to achieve consistent flow uniformity, it is important to select suitably sized components so that the cross-sectional flow area of the ports, distribution chambers, and supply pipes for both fuel and air are in proper proportion relative to one another. Preferably, the ratio of the flow area of the supply pipe to the total port flow area, and the ratio of the flow area of the distribution chamber to the total port flow area, is between about 2:1 to 3:1 for both fuel and air. For example, the following flow area ratios are employed in the preferred embodiment of the improved burner head and apparatus of FIGs. 4 through 6:

| Table of Cross-Sectional Flow Area Ratios | | |
|---|---|---|
| Path | Supply Pipe: Ports Ratio | Distribution Chamber: Ports Ratio |
| First Air | 2.49:1 | 2.18:1 |
| Fuel | 2.40:1 | 2.08:1 |
| Second Air | 2.49:1 | 2.89:1 |

Third, the exit velocity of fuel and air discharged from burner head 100 is preferably sufficiently high so as to generate low-pressure areas around each of the fuel and air ports. The low-pressure areas around each fuel port 116 and air port 126 and 136, respectively, further improve fuel/air mixing and also increase flame attachment (jet stabilization). Also, in applications where the composition of the fuel and air may change, the different mass flows, temperatures, pressures, and densities of fuel and air are a factor. The fuel and air ports must be carefully sized so that sufficiently substantial fuel and air exit velocities are maintained in all modes of operation.

Finally, the ratio of the length of fuel ports 116 and air ports 126 and 136 to their respective diameters must be selected to ensure that fuel and air exiting the ports is substantially evenly distributed about the longitudinal axes of the ports. Preferably, the ratio of the length to diameter of each of the ports should be at least 2:1.

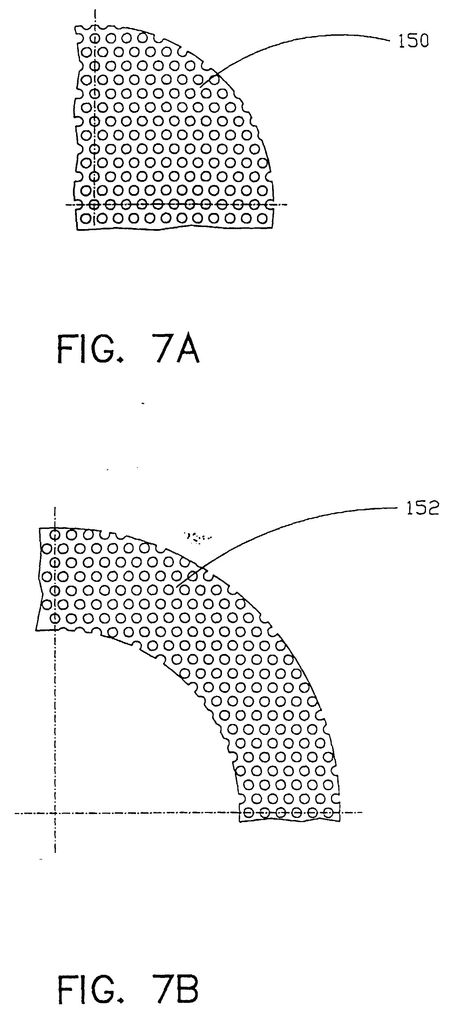

The preferred embodiment of FIGs. 4 through 6 incorporates further means for improving the uniformity of heat distribution and thorough mixing of fuel and air. For example, a non-axisymmetric air feed can cause uneven flow distributions across the cross-section of air supply pipes 120 and 130. Air diffusers 150 and 152 can be used in the present burner apparatus to increase the uniformity of flow distribution across the cross-section of the air supply pipes. In the preferred embodiment, air diffusers 150 and 152 are perforated plates, preferably with 25-75% open area, and with best results being obtained using perforated plate having around 35% open area. FIGs. 7A and 7B are top views of quarter-sections of a preferred embodiment of air diffusers 150 and 152, respectively. Perforated plates like the ones depicted in FIGs. 7A and 7B generate sufficient restriction to the air flow to even out downstream flow asymmetries without producing excessive pressure drop. In addition, it is possible to selectively plug perforations in the plate in order to further improve the air flow distribution. Other designs could also be used for the air diffusers, provided they are capable of improving air flow distribution at the low operating pressure of the burner (that is, at a pressure drop through the burner of less than 0.5 psi (3.4 kPa), and in particular, less than or equal to 0.3 psi (2.1 kPa)).

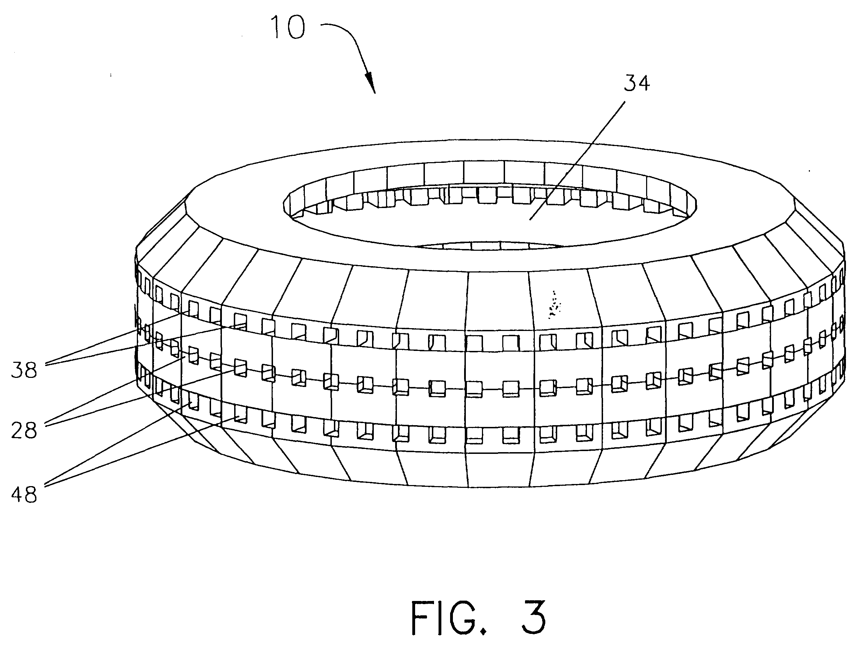

In preferred embodiments fuel ports 116 and air ports 126 and 136 are angled away from mounting plate 102, as shown most clearly in FIG. 5. Finally, the shape of the fuel ports and the air ports is also important in promoting thorough mixing of the fuel and air exiting the burner head. In the embodiment illustrated in FIG. 3, the fuel ports 28 and air ports 38 and 48 have square openings. Different shapes may be used, but circular port openings of the type shown in FIGs. 4 and 6 are considered most preferred. A circular opening produces a relatively even cross-sectional exit velocity, contributing to a uniform distribution of fuel and air discharged from burner head 100. Further, the exit end of all fuel and air ports may preferably comprise sharp, unradiused corners to further enhance flow separation and to maintain the integrity of flow of fuel and air exiting the ports. By using the preferred embodiment of the present nozzle-mix burner apparatus, substantially uniform fuel and air distribution and mixing may be achieved during steady state operation, as indicated by ambient flow measurements showing circumferential flow uniformity within ±2% around the fuel and air ports, respectively.

The present nozzle-mix burner also achieves flame stabilization without requiring any additional stabilizing agent or surface. Unlike conventional nozzle-mix burners that typically employ a burner block/tube or deflector elements to direct burner gases and stabilize the flame, the flame generated by the present burner is directed into the essentially open space of combustion zone 50 or 140. Flame attachment and stabilization is accomplished in the present design primarily by jet stabilization, and is enhanced by the sharp edges of the fuel and air ports and the amount of bluff surface between them.

FIG. 8 is a sectional elevation view of catalytic reformer 200 incorporating the preferred embodiment- of the present nozzle-mix burner apparatus of FIGs. 4 through 6, with burner mounting plate 102 and flange 103, backpane 162, reformer vessel 104, and reactor tube assemblies 160. During operation, fuel and air are discharged from burner head 100 into combustion zone 140 where the fuel and air are mixed and burned. The combustion preferably maintains the temperature of reactor tube assemblies 160 within a desired range of about 1000°F (538°C) to about 1400°F (760°C). As discussed above, the ports of burner head 100 are advantageously oriented to direct fuel and air toward the desired combustion zone 140. In reformer vessel 104, it is desirable to locate combustion zone 140 near reactor tubes 160 in which the catalyst is disposed for promoting the desired endothermic reactions. The angled burner head ports also direct combustion zone 140 away from backpane 162 and the ignitor (not shown). By directing the combustion zone away from backpane 162 and the ignitor, they are subject to less thermal stress which may increase the operational lifetime of these components. Further, it is believed that this burner head configuration also helps to establish a recirculation pattern and further improve fuel/air mixing and flame stability. When the fuel and air supplied to the burner are the anode and cathode exhaust streams of an associated fuel cell (not shown), a combination of the hydrogen content in the anode exhaust stream, the high temperature of reactor tubes 160 proximate to burner head 100, and the configuration of burner head 100, allows the burner to stably and efficiently operate with the cathode exhaust stream, which may have an oxygen content of less than or equal to 11% by volume, as the only oxygen source.

While particular elements, embodiments and applications of the present invention have been shown and described, it will be understood, of course, that the invention is not limited thereto since modifications may be made by those skilled in the art without departing from the spirit and scope of the present disclosure, particularly in light of the foregoing teachings.

## Claims

1. A nozzle-mix burner comprising a burner head, said burner head comprising:
(a) a first air distribution chamber having at least one air inlet for supplying air thereto, and a plurality of first air ports for discharging air therefrom;
(b) a second air distribution chamber having at least one air inlet for supplying air thereto, and a plurality of second air ports for discharging air therefrom;
(c) a fuel distribution chamber having at least one fuel inlet for supplying fuel thereto, and a plurality of fuel ports for discharging fuel therefrom;
wherein within said burner head said fuel distribution chamber is fluidly isolated from, and interposed between, said first and second air distribution chambers, and said fuel ports and said first and second air ports are arranged such that in operation fuel discharged from said fuel ports mixes with air discharged from said first and second air ports.

2. The nozzle-mix burner of claim 1 wherein within said burner head said first air distribution chamber is fluidly isolated from said second air distribution chamber such that air within said first air distribution chamber does not mix with air within said second air distribution chamber.

3. The nozzle-mix burner of claim 2 wherein said burner head comprises a unitary structure divided into three fluidly isolated distribution chambers.

4. The nozzle-mix burner of claim 1 wherein said burner head is substantially in the shape of a cylinder, wherein said first and second air distribution chambers are spaced along the longitudinal axis of said cylinder.

5. The nozzle-mix burner of claim 4 wherein said plurality of fuel ports and said first and second air ports are spaced around the outer curved surface of said cylinder for providing a substantially symmetric radial distribution of said fuel and air about said burner head.

6. The nozzle-mix burner of claim 1 wherein said burner head is substantially in the shape of a frustum comprising at least one substantially planar radial surface and a curved lateral surface, and said fuel ports and said first and second air ports are formed in said lateral surface.

7. The nozzle-mix burner of claim 6 wherein in operation said fuel and air are discharged from said respective fuel ports and said first and second air ports in a direction substantially perpendicular to said lateral surface.

8. The nozzle-mix burner of claim 6 wherein said lateral surface is sloped towards the axis of said frustum at an angle of about 75°.

9. The nozzle-mix burner of claim 6 wherein said plurality of fuel and air ports are spaced around said lateral surface for providing a substantially symmetric radial distribution of said fuel and air about said burner head.

10. The nozzle-mix burner of claim 1 wherein each one of said plurality of fuel ports is disposed between at least one of said plurality of said first air ports and at least one of said plurality of said second air ports.

11. The nozzle-mix burner of claim 10 wherein at least one of said fuel or air distribution chambers and associated fuel and air ports, respectively, are configured to discharge respective fuel or air in a direction towards a desired combustion zone.

12. The nozzle-mix burner of claim 11 wherein said fuel and air distribution chambers and associated fuel and air ports, respectively, are configured to discharge respective fuel and air from said burner head at an angle less than or equal to 90° from the longitudinal axis of said burner head in a direction towards a desired combustion zone.

13. The nozzle-mix burner of claim 1 wherein said fuel ports and said first and second air ports are substantially circular.

14. The nozzle-mix burner of claim 1 further comprising:
(1) a first air supply pipe for supplying said air from an air feed to said first air distribution chamber via said at least one associated air inlet;
(2) a second air supply pipe for supplying said air from said air feed to said second air distribution chamber via said at least one associated air inlet; and
(3) a fuel supply pipe for supplying said fuel from a fuel feed to said fuel distribution chamber via said at least one associated fuel inlet.

15. The nozzle-mix burner of claim 14 wherein said air and fuel supply pipes are substantially co-axial.

16. The nozzle-mix burner of claim 15 wherein at least a portion of each of said air and fuel supply pipes is disposed within, or around, another one of said air and fuel supply pipes.

17. The nozzle-mix burner of claim 16 wherein said air and fuel supply pipes are defined by:
(1) a first air supply pipe extending through said second air distribution chamber and said fuel distribution chamber and supplying said air to said first air distribution chamber via said at least one associated air inlet;
(2) a fuel supply pipe extending through said first air distribution chamber and supplying said fuel through an annular space between said fuel supply pipe and said first air supply pipe to said fuel distribution chamber via said at least one associated fuel inlet; and
(3) a second air supply pipe supplying said air through an annular space between said second air supply pipe and said fuel supply pipe to said second air distribution chamber via said at least one associated air inlet.

18. The nozzle-mix burner of claim 14 wherein the ratio of the cross-sectional flow area of said first air distribution chamber to the cross-sectional flow area of said associated plurality of first air ports is about 2:1.

19. The nozzle-mix burner of claim 14 wherein the ratio of the cross-sectional flow area of said first air supply pipe to the cross-sectional flow area of said associated plurality of first air ports is about 2.5:1.

20. The nozzle-mix burner of claim 14 wherein the ratio of the cross-sectional flow area of said second air distribution chamber to the cross-sectional flow area of said associated plurality of second air ports is about 3:1.

21. The nozzle-mix burner of claim 14 wherein the ratio of the cross-sectional flow area of said second air supply pipe to the cross-sectional flow area of said associated plurality of second air ports is about 2.5:1.

22. The nozzle-mix burner of claim 14 wherein the ratio of the cross-sectional flow area of said fuel distribution chamber to the cross-sectional flow area of said associated plurality of fuel ports is about 2:1.

23. The nozzle-mix burner of claim 14 wherein the ratio of the cross-sectional flow area of said fuel supply pipe to the cross-sectional flow area of said associated plurality of fuel ports is about 2.5:1.

24. The nozzle-mix burner of claim 14 further comprising:
(4) an air diffuser disposed in said first air supply pipe between said air feed and said at least one associated air inlet; and
(5) an air diffuser disposed in said second air supply pipe between said air feed and said at least one associated air inlet;
wherein said air diffusers increase the uniformity of flow distribution of said air across the cross-section of said first and second air supply pipes.

25. The nozzle-mix burner of claim 24 wherein each one of said air diffusers comprises a perforated plate.

26. The nozzle-mix burner of claim 25 wherein the open area of said perforated plate is between 25 and 75 percent.

27. The nozzle-mix burner of claim 26 wherein the open area of said perforated plate is about 34%.

28. The nozzle-mix burner of claim 1 wherein during operation, the pressure drop of fuel and air streams passing through said burner is less than about 0.5 psi (3.45 kPa).

29. The nozzle-mix burner of claim 1 wherein during operation, the pressure drop of fuel and air streams passing through said burner is less than about 0.3 psi (2.1 kPa).

30. The nozzle-mix burner of claim 1 wherein said burner is capable of stable operation using a fuel stream comprising fuel selected from the group consisting of hydrogen, natural gas, reformate, and anode exhaust gas.

31. The nozzle-mix burner of claim 1 wherein said burner is capable of stable operation using an oxygen-containing gas for combustion which comprises less than 13% oxygen by volume.

32. A catalytic reformer comprising:
(a) a reformer vessel;
(b) at least one reactor tube assembly containing a catalyst, said reactor tube assembly disposed within said reformer vessel; and
(c) the nozzle-mix burner of claim 1 wherein said burner head is disposed within said reactor vessel for providing heat to said at least one reactor tube.

33. The catalytic reformer of claim 32 wherein, at the operating temperature of said catalytic reformer, said reactor tube assembly radiates heat in the vicinity of said burner head to assist with maintaining stable operation of said burner when supplied with a combustion air stream with an oxygen concentration of less than 13% by volume.

34. The catalytic reformer of claim 33 wherein said burner is capable of stable operation when fed with a combustion air stream with less than or equal to 11% oxygen by volume.

35. The catalytic reformer of claim 33 wherein said burner is capable of stable operation when the pressure drop of fuel and air streams passing through said burner is less than about 0.5 psi (3.4 kPa).

36. The catalytic reformer of claim 33 wherein said burner is capable of stable operation when the pressure drop of fuel and air streams passing through said burner is less than about 0.3 psi (2.1 kPa).
